# EUROPEAN PATENT APPLICATION

(11) **EP 3 632 609 A1**
(43) Date of publication of application: **08.04.2020**
(21) Application number: 19464013.2
(22) Date of filing: 18.07.2019
(51) Int. Cl.: B23K 31/02, B23K 37/00, H01R 4/58, H01R 4/66, B23K 103/00

(54) **SEMI-FINISHED PRODUCT FOR EARTHING ELECTRODES AND MANUFACTURING PROCESS THEREFORE**

(30) Priority: 18.07.2018 RO 201800539
(71) Applicant: sc Betak SA, 420063 Bistrita-Nasaud (RO)
(72) Inventor: Bulea, Caius Casiu, 420033 Bistrita (RO)
(74) Representative: Isoc, Dorin

(57) **Abstract**

The semi-finished product of the electrode length consists of two profiled components parts ( **1** and **2** ) which in section appear as an open broken line consisting of three segments ( **L1, L2** and **L3** respectively) located on one side of any of the semi-rectangles forming the line and the three segments of the profile form between them some angles ( **L1** with **L2** an angle **α** and **L2** respectively with **L3,** an angle **β** ) within the range of 90 ... 150 ° which is obtained by profiling from strips of ( **1** and **2** respectively), cut to electrode length and supported on the medial segment ( **L2** ) of the profile and which are then welded by a generally known method, first by marking at one of the two ends **A** and **B** ) of the pair, and further by welding with a specific continuous welding strip from the opposite end ( **B** ) to the end ( **A** ) where the initial welding point was previously placed.

## Description

The invention relates to a semi-finished product for earthing electrodes and a manufacturing process for their industrial production in large series and specialized machines.

Earthing electrodes are mechanical component part of electrical circuits designed to discharge accidental overvoltages and provide protection for communication lines. The electrodes are designed in such a way that the overcurrent discharge is provided for sufficiently large anticipated values. The anticipation of the values of the overcurrents is made only by reference to a specific practice that takes into account the size of the area where the electric circuit is located, the neighboring meteorological specificity, but also a multitude of specificities difficult to uniform ([1]). In a professionally accepted context, it is admitted that the entire design experience is included in the recommendations of standards ([2], [3], [4], [5], [6]) whose only conclusion is certain over-dimensioning with safety factors of significant values.

This way of dealing with the problem is transposed into practice by the introduction of rules that reduce the design of electrodes to determine electrical parameters corresponding to the equivalent exposure area and mechanical parameters that could provide easy penetration into the neighboring soil of the protected object.

For the industrial production of earthing electrodes, a semi-finished product is obtained by drawing with cross-section as a cross with straight arms produced in the form of fixed length bars.

As the length resulting from the design depends on the estimated surface of the electrode and the equivalent surface area of the linear length unit is constant, the disadvantage of using this semi-finished profile is that adaptation to the design requirements is difficult to assure, and that the fixed length of the original preform results in loss, at the moment of cutting to the set length.

A semi-finished product obtained by preforming is also known, followed by pressing and welding in length ([7]).

The disadvantages of this semi-finished product are that the surface of the electrode leads to the gauging enlargement by increasing the size of the lateral wings and that, during deformation of the electrode along the length of the blank, there appear deformations and uncompensated deformation stresses.

The problem solved by the invention is to develop a semi-finished product for the production of earthing electrodes so that its properties are optimal as a profile and material and the production to best meet the conditions of production sizing in conditions of full economy.

The semi-finished product for earth electrode according to the invention eliminates the above disadvantages because it is made up of two profiled components which in the section appear as an open broken line consisting of three segments located on one side of any of the semi-rows that make up the line and the three segments of the profile forms between them angles comprised within the range of 90 ... 150° which are obtained by profiling from sheet metal strips, cut to the length of the electrode and then profiled, overlapped and supported on the medial section of the profile and then welded through a generally known process, first by marking at one of the two ends of the pair and then by welding with a specific continuous strip, from the opposite end to the end where the initial welding point was previously placed.

The advantages of the invention are that it provides a uniform and optimal quality in terms of the requirements of the earthing electrode under the conditions in which the production of the earthing electrode by industrial means is economical.

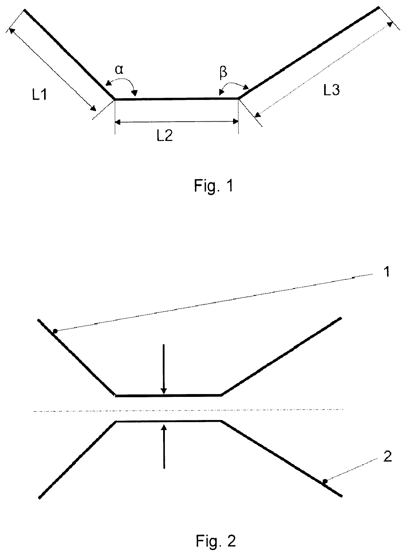

An embodiment of the invention will now be described also with reference to **Fig. 1** and **Fig. 2** showing:
**Fig. 1** - geometric details of the semiprofile that builds the semi-finished product;
**Fig. 2** **-** how to position the semiprofile components of the semi-finished product.

The semi-finished product according to the invention is obtained on industrial way from two sheet metal sections (**Fig. 1**) sectioned as an open broken line consisting of three segments **L1**, **L2** and **L3**, respectively, where the segments are located on one side of any of half straight line forming the polygonal line. The three segments of the profile form, **L1** with **L2** an angle **α,** and respectively **L2** with **L3**, an angle **β**. Both angles **α** and **β** are within the range of 90 to 150 °.

The components of the semi-finished product are made of sheet metal, profiled so that their parameters are fully realized. Two strips thus profiled, then cut to the length of the electrode to be made, placed in the mirror (**Fig. 2**) face to the median segment **L2**, relative to an axis of symmetry, are welded by a generally known process.

Welding is done in such a way that at the two ends **A** and **B** respectively, in the area of the medial segment **L2** of each of the two overlapping profiled strips **1** and **2** respectively, be it **A,** a weld point is placed and further the welding is built with a continuous, specific strip from the opposite end **B** to the end **A.**

### References

[1] SCHWAB, A.J. Electromagnetic Compatibility (In Romanian). Translated from German: MARINESCU, Andrei, POPESCU, Silvia. Foreword: 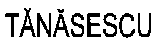 , Florin Teodor. Bucharest: Editura 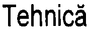 . 1996.
[2] * * *. SR CEI 61312 1/2000. Protection against electromagnetic pulse generated by lightning. Part 1: General principles (In Romanian). Romanian Standardization Association. 2000.
[3] * * *. SRCEI 61312-2 / 2000. Protection against electromagnetic pulse generated by lightning. Part 2: Shielding of structures, equipotentialisation inside them and grounding (In Romanian). Romanian Standardization Association, 2000.
[4] * * *. SR CEI 6131-4 / 2000. Protection against electromagnetic pulse generated by lightning. Part 4: Protection of equipment in existing structures (In Romanian). Romanian Standardization Association, 2000.
[5] * * *. IEC 62305-1. Protection against lightning - Part 1: General principles. Edition 2.0 2010-12. International Electrotechnical Commission. 2010.
[6] IAEI. IAEI Soares Book on Grounding. International Association of Electrical Inspectors. Sept.1996. ISBN 10: 1890659002 / ISBN 13: 9781890659004.
[7] BULEA, Caius Casiu, NECHITI, Valer. Process for producing the semi-finished product for earthing electrodes (In Romanian). Patent Application a 2016 00358.

## Claims

1. A semi-finished product for earthing electrodes intended for industrial production, in large series and with specialized machinery, semifabricated by the electrode length consisting of two profiled components **(1** and **2) wherein** in cross-section, it appears as a open broken line (**L1**, **L2** and **L3** respectively) located on one side of any of the half-sections forming the line and the three segments of the profile form between them some angles (**L1** with **L2** an angle **α** and, **L2** respectively with **L3,** an angle **β**) within the range of 90 ... 150 °.

2. The process for producing the earth electrode blank as in claim 1 **wherein** the profile of the two components **(1** and **2)** of the semi-finished product is of electrode length made of stripes, cut and profiled, overlapped **(1** and **2** respectively)) and supported on the medial segment **(L2)** of the profile and placed in mirror relative to a parallel axis of symmetry axis, component parts which are welded by a method generally known in such a way that at one of the two ends (**A,** and **B** respectively) of the pair to place a welding point and then continue the welding with a continuous, specific strip from the opposite end **(B)** to the end **(A)** where the initial welding point was previously placed.
